# EUROPEAN PATENT APPLICATION

(11) **EP 4 786 838 A1**
(43) Date of publication of application: **05.08.2026**
(21) Application number: 24902473.8
(22) Date of filing: 12.11.2024
(51) Int. Cl.: F16L 37/23, F16L 37/36

(54) **FLUID CONNECTOR AND CONNECTOR LOCK SYSTEM THEREOF**

(30) Priority: 15.12.2023 CN 202311734536
(71) Applicant: Shenzhen Envicool Intelligent Connection Technology Co., Ltd., Shenzhen, Guangdong 518000 (CN)
(72) Inventor: CHEN, Gang, Shenzhen, Guangdong 518000 (CN)
(74) Representative: Torggler & Hofmann Patentanwälte - Innsbruck
(86) International application number: PCT/CN2024/131527
(87) International publication number: WO 2025/124050

(57) **Abstract**

A fluid connector and a connector lock system thereof, relating to the technical field of fluid connectors. The connector lock system comprises: a pressing sleeve, wherein a first cavity and a second cavity are formed in the pressing sleeve; a slide bushing slidably sleeved on the outer periphery of the pressing sleeve; a female end valve seat fixedly sleeved at the end of the pressing sleeve, wherein a first spring is provided between the female end valve seat and the slide bushing; a lock ball sleeve movably provided in the second cavity, wherein a third spring is provided between the end of the lock ball sleeve and the inner step surface of the pressing sleeve; a lock ball, wherein a through mounting hole is formed in the pressing sleeve, the lock ball is movably provided in the mounting hole, a third inclined surface is provided in the slide bushing, a clamping groove configured to bear the lock ball is formed in the end of the lock ball sleeve, and in an initial state, the third inclined surface and the outer wall of the lock ball sleeve are both in contact with the lock ball, so that the lock ball is in a balanced state, and the lock ball is not in the clamping groove; and a male end body, wherein a male head boss is provided on the outer wall of the male end body so as to push the lock ball sleeve to move. The system enables an operator to realize locking and unlocking operations of the connector with less effort.

## Description

The present application claims priority to Chinese Patent Application No. 202311734536.1, titled "FLUID CONNECTOR AND CONNECTOR LOCK SYSTEM THEREOF", filed on December 15, 2023 with the China National Intellectual Property Administration, which is incorporated herein by reference in its entirety.

### FIELD

The present application relates to the technical field of fluid connectors, and in particular to a connector locking system. In addition, the present application further relates to a fluid connector having the connector locking system.

### BACKGROUND

With social progress and technological development, the Internet of Everything has imposed an increasingly high demand for the computational speed of various chips, consequently leading to higher requirements for chip cooling. Currently, traditional air cooling can no longer meet the cooling demands, and various new types of fluid heat sinks are becoming the mainstream. The fluid connector serves as a joint between the fluid source and various chip heat sinks. The fluid connector includes a male terminal and a female terminal. When the fluid source is disconnected, the male terminal and the female terminal are each separately sealed to prevent fluid leakage or ejection. When the male terminal and the female terminal are mated, their respective sealing structures are opened, connecting the fluid source to the heat sink. This allows the fluid to circulate and carry away heat, thereby achieving efficient cooling.

In the implementation of the present application, it is found that there are at least the following issues in the conventional technology.

Currently, steel balls are commonly employed for locking when the male terminal and the female terminal are mated. However, in the typical steel ball locking mechanism, the female sliding sleeve is driven by the steel ball to move, resulting in a point contact between the steel ball and both the male terminal and the female sliding sleeve. This leads to a relatively small contact area between the components, so that the operator is required to exert a significant force to push the female sliding sleeve. In other words, the process of inserting the male terminal into the female terminal is hard, resulting an unfriendly feel.

In summary, how to improve the operational feel of the connector locking mechanism is an urgent issue that needs to be addressed by those skilled in the art.

### SUMMARY

In view of this, an object of the present application is to provide a connector locking system that enables an operator to achieve locking and unlocking of the connector with an easy process, thereby improving the feel of operating the connector locking mechanism. Another object of the present application is to provide a fluid connector having the connector locking system.

In order to achieve the above objects, following technical solutions are provided according to the present application.

A connector locking system includes a pressing sleeve, a sliding sleeve, a female valve seat, a locking ball sleeve, a locking ball, and a male body.

A first chamber and a second chamber communicated with the first chamber are provided in the pressing sleeve.

The sliding sleeve is arranged on an outer periphery of the pressing sleeve.

The female valve seat is fixedly mounted outside an end of the pressing sleeve, and a first spring is arranged between an end of the female valve seat and a first boss of the sliding sleeve.

The locking ball sleeve is movably arranged within the second chamber, and a third spring is arranged between an end of the locking ball sleeve and an inner stepped surface of the pressing sleeve.

The pressing sleeve has a through mounting hole, and the locking ball is movably arranged within the mounting hole. The sliding sleeve internally has a third inclined surface. A snap groove is formed in an end of the locking ball sleeve to receive the locking ball. In an initial state, both the third inclined surface and an outer wall of the locking ball sleeve are in contact with the locking ball, so that the locking ball is in a balanced state and is not located within the snap groove.

A male boss is arranged on an outer wall of the male body. The male boss includes a first inclined surface, a transition surface and a second inclined surface that are joined in sequence. The first inclined surface can cooperate with an inner wall of the locking ball sleeve to push the locking ball sleeve to move.

In a possible design, a stop pin is arranged inside the pressing sleeve for limiting a stroke of the locking ball sleeve.

In a possible design, the locking ball sleeve includes a first annular surface, a fourth inclined surface and a second annular surface that are joint in sequence. The first annular surface has a diameter smaller than that of the second annular surface.

The first annular surface has a spring hole for accommodating the third spring, and the snap groove is formed in the second annular surface.

In a possible design, the outer periphery of the pressing sleeve has an outer stepped surface to limit the movement of the first boss.

A position-limiting boss is provided on an outer periphery of the female valve seat to limit the movement of an end of the sliding sleeve.

In a possible design, the mounting hole has a larger dimension on a side facing the sliding sleeve than that of the locking ball, and has a smaller dimension on a side facing away from the sliding sleeve than that of the locking ball.

A fluid connector includes the connector locking systems according to any one of the above embodiments, and a female valve core and a valve stem. An opening is formed between the first chamber and the second chamber. The female valve core is internally provided with a flow channel, and an outer wall of the female valve core can cooperate with the opening and the first chamber to block the opening.

One end of the valve stem is connected to the female valve seat, and the other end of the valve stem extends through the first chamber and is inserted into the female valve core to block the flow channel. A drainage channel is provided in the valve stem. A second spring is arranged between an end of the female valve core and a second boss of the valve stem.

In a possible design, a first sealing ring is arranged on an inner wall of the opening, and a second sealing ring is arranged at a connection between the female valve seat and the pressing sleeve. A third sealing ring is arranged at an end of the female valve seat, and a fourth sealing ring is arranged at an end of the valve stem configured for blocking the female valve core.

In a possible design, the fluid connector further includes a male valve core, which is arranged within a chamber of the male body. A male spring is arranged between an end of the male valve core and an end of the male body.

In a possible design, a sum of elastic forces of the male spring and the second spring is greater than that of elastic forces of the first spring and the third spring.

In a possible design, a fifth sealing ring is arranged at an end of the male body, and a sixth sealing ring is arranged at an end of the male valve core.

Compared with the conventional technology, the fluid connector and the connector locking system thereof provided by the present application have at least the following beneficial effects.

When the connector locking system provided by the present application is used, in the initial state, both the third inclined surface of the sliding sleeve and the outer wall of the locking ball sleeve are in contact with the locking ball, so that the locking ball is in a balanced state and is not located within the snap groove.

When the male terminal is held by an operator and directly inserted into the second chamber of the female terminal, the male boss of the male body comes into contact with the inner wall of the locking ball sleeve. As the operator continuously applies force, the male body is moved towards the first chamber. During this process, the locking ball sleeve moves towards the first chamber under the action of the first inclined surface of the male boss until the transition surface of the male boss passes over the locking ball on the female terminal, and then the locking ball falls and engages with the snap groove. At this point, the locking ball no longer presses against the sliding sleeve, which then moves towards the second chamber under a thrust of the first spring until the third inclined surface of the sliding sleeve passes over the locking ball, and the narrower inner wall surface of the sliding sleeve presses against the top of the locking ball, preventing the locking ball from retracting. In this case, both the inner wall surface of the sliding sleeve and the second inclined surface of the male boss are in contact with the locking ball, achieving a locking between the male terminal and the female terminal.

When the operator holds the sliding sleeve with one hand and makes it move towards the first chamber until it leaves the locking ball, the locking ball may retract freely. Additionally, the male boss of the male body may move backward towards the second chamber. When the male boss moves backward, the locking ball may be pushed up by the second inclined surface to move upward and unlock. In this case, the locking ball sleeve may be pushed by the third spring to move towards the second chamber. At this point, the locking ball is disengaged from the snap groove, and the outer wall of the locking ball sleeve is located below the locking ball, preventing the sliding sleeve from being tightly pressed against by the locking ball. As a result, the sliding sleeve is in an unlocked state, facilitating the complete removal of the male terminal.

In the connector locking system provided by the present application, the locking ball sleeve, the locking ball, the sliding sleeve, the springs and other components are utilized, in conjunction with external force applied by the operator. Moreover, the surface contact between the locking ball and both the locking ball sleeve and the sliding sleeve enables the operator to perform the locking and unlocking operations of the connector with less effort. In addition, the locking ball sleeve is in an unlocked state for a long time, which facilitates the insertion of the connector, leading to convenient operation, a gentle insertion feel and an enhanced reliability.

In summary, the connector locking system provided by the present application enables the operator to perform locking and unlocking operations of the connector with less effort, thereby enhancing the operational feel of the connector locking mechanism.

Since the fluid connector provided by the present application includes the above connector locking system, it also has the same beneficial effects as the connector locking system.

### BRIEF DESCRIPTION OF THE DRAWINGS

In order to more clearly illustrate the technical solutions in the embodiments of the present application or in the conventional technology, the accompanying drawings required for describing the embodiments or the conventional technology will be briefly introduced below. It is apparent that the accompanying drawings described below only show some embodiments of the present application. Based on these accompanying drawings, other accompanying drawings can be obtained by those ordinary skilled in the art without any creative effort.
FIG. 1 is a schematic structural view of a connector locking system provided by the present application when a valve is closed;
FIG. 2 is a schematic structural view when the male terminal is inserted into the female terminal and the valve is opened;
FIG. 3 is a schematic structural view when the male terminal is initially inserted into the female terminal;
FIG. 4 is a schematic structural view when the male terminal is further inserted into the female terminal;
FIG. 5 is a schematic structural view when the male terminal is inserted in place into the female terminal;
FIG. 6 is a schematic structural view the locking ball sleeve; and
FIG. 7 is a schematic structural view of the male terminal.

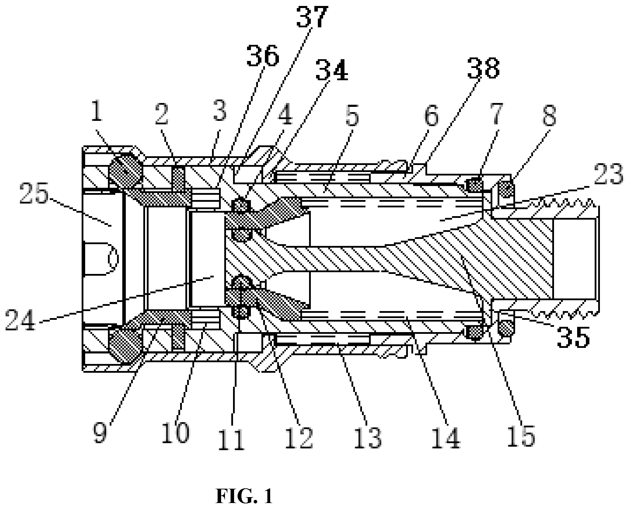

Numeral references in FIGS. 1 to 7 are as follows:
1. locking ball; 2. stop pin; 3. sliding sleeve; 4. first sealing ring; 5. pressing sleeve; 6. female valve seat; 7. second sealing ring; 8. third sealing ring; 9. locking ball sleeve; 10. third spring; 11. fourth sealing ring; 12. female valve core; 13. first spring; 14. second spring; 15. valve stem; 16. clamping spring; 17. spring retaining ring; 18. male spring; 19. fifth sealing ring; 20. male body; 21. male valve core; 22. sixth sealing ring; 23. first chamber; 24. opening; 25. second chamber; 26. third inclined surface; 27. spring hole; 28. snap groove; 29. fourth inclined surface; 30. first inclined surface; 31. male boss; 32. transition surface; 33. second inclined surface; 34. first boss; 35. second boss; 36. inner stepped surface; 37. outer stepped surface; 38. position-limiting boss; 39. mounting hole; 40. second annular surface; 41. first annular surface.

### DETAILED DESCRIPTION OF THE EMBODIMENTS

The technical solutions in the embodiments of the present application will be described clearly and completely below with reference to the accompanying drawings herein. It is apparent that the described embodiments are only some rather than all of the embodiments of the present application. Based on the embodiments of the present application, all other embodiments obtained by those skilled in the art without any creative effort fall within the protection scope of the present application.

A core of the present application is to provide a connector locking system, which enables the operator to achieve locking and unlocking of the connector with an easy process, thereby enhancing the feel of operating the connector locking mechanism. Another core of the present application is to provide a fluid connector including the connector locking system.

Reference is made to FIGS. 1 to 7.

A connector locking system is provided in this specific embodiment, including: a pressing sleeve 5, a sliding sleeve 3, a female valve seat 6, a locking ball sleeve 9, a locking ball 1, and a male body 20.

A first chamber 23 and a second chamber 25 communicated with the first chamber 23 are formed in the pressing sleeve 5.

The sliding sleeve 3 is arranged on an outer periphery of the pressing sleeve 5.

The female valve seat 6 is fixedly mounted outside an end of the pressing sleeve 5, and a first spring 13 is arranged between an end of the female valve seat 6 and a first boss 34 of the sliding sleeve 3.

The locking ball sleeve 9 is movably arranged within the second chamber 25, and a third spring 10 is arranged between an end of the locking ball sleeve 9 and an inner stepped surface 36 of the pressing sleeve 5.

The pressing sleeve 5 has a through mounting hole 39, and the locking ball 1 is movably arranged within the mounting hole 39. The sliding sleeve 3 internally has a third inclined surface 26. A snap groove 28 is formed in an end of the locking ball sleeve 9 to receive the locking ball 1. In an initial state, the third inclined surface 26 and an outer wall of the locking ball sleeve 9 are both in contact with the locking ball 1, so that the locking ball 1 is in a balanced state and is not located within the snap groove 28.

A male boss 31 is arranged on an outer wall of the male body 20. The male boss 31 includes a first inclined surface 30, a transition surface 32 and a second inclined surface 33 that are joined in sequence. The first inclined surface 30 can cooperate with an inner wall of the locking ball sleeve 9 to push the locking ball sleeve 9 to move.

It should be noted that the sliding sleeve 3 has the third inclined surface 26 inside. Specifically, an inner diameter of the third inclined surface 26 on a side close to the first chamber 23 may be smaller than that of the third inclined surface 26 on a side close to the second chamber 25. Therefore, when the sliding sleeve 3 is moved rightward, a distance between an inner wall surface of the sliding sleeve 3 and the locking ball 1 becomes larger. When the sliding sleeve 3 is moved leftward, the sliding sleeve 3 comes into close contact with the locking ball 1, thereby increasing the pressing force exerted by the sliding sleeve 3 on the locking ball 1.

In practical application, the shapes, structures, dimensions, and other aspects of the pressing sleeve 5, the sliding sleeve 3, the female valve seat 6, the locking ball sleeve 9 and the ball lock 1 can be determined depending on actual conditions and requirements.

When the connector locking system provided by the present application is used, in the initial state, the third inclined surface 26 of the sliding sleeve 3 and the outer wall of the locking ball sleeve 9 are both in contact with the locking ball 1, so that the locking ball 1 is in a balanced state and is not located within the snap groove 28.

When an operator holds the male terminal and directly inserts it into the second chamber 25 of a female terminal, the male boss 31 of the male body 20 comes into contact with an inner wall of the locking ball sleeve 9. As the operator keeps applying force, the male body 20 is moved towards the first chamber. During this process, the locking ball sleeve 9 moves towards the first chamber 23 under the action of the first inclined surface 30 of the male boss 31 until the transition surface 32 of the male boss 31 passes over the locking ball 1 on the female terminal. The locking ball 1 then falls and is stuck in the snap groove 28. At this point, the locking ball 1 no longer presses against the sliding sleeve 3, which then moves towards the second chamber 25 under a thrust of the first spring 13 until the third inclined surface 26 of the sliding sleeve 3 passes over the locking ball 1. Then, the narrower inner wall surface of the sliding sleeve 3 presses against a top of the locking ball 1, preventing the locking ball 1 from retracting. In this case, the inner wall surface of the sliding sleeve 3 and the second inclined surface 33 of the male boss 31 are both in contact with the locking ball 1, achieving a locking between the male terminal and the female terminal.

When the operator holds the sliding sleeve 3 by one hand and makes the sliding sleeve 3 move towards the first chamber 23 until it leaves the locking ball 1, the locking ball 1 may retract freely. Additionally, the male boss 31 of the male body 20 may move backward towards the second chamber 25. When the male boss 31 moves backward, the locking ball 1 may be pushed up by the second inclined surface 33 to move upward and unlock. In this case, the locking ball sleeve 9 may be pushed by the third spring 10 to move towards the second chamber 25. At this point, the locking ball 1 separates itself from the snap groove 28, and the outer wall of the locking ball sleeve 9 is located below the locking ball 1, preventing the sliding sleeve 3 from being tightly pressed by the locking ball 1. As a result, the sliding sleeve 3 is in an unlocked state, facilitating the complete removal of the male terminal.

In the connector locking system provided by the present application, components such as the locking ball sleeve 9, the locking ball 1, the sliding sleeve 3, and the springs (including the first spring 13 and the third spring 10) are utilized in conjunction with an external force applied by the operator. Moreover, the surface contact between the locking ball 1 and both the locking ball sleeve 9 and the sliding sleeve 3 enables the operator to perform the locking and unlocking operations of the connector with an easy process. In addition, the locking ball sleeve 9 is in an unlocked state for a long time, which facilitates the insertion of the connector, leading to a convenient operation, a gentle insertion feel and an enhanced reliability.

In summary, the connector locking system provided by the present application enables the operator to perform locking and unlocking operations of the connector with an easy process, thereby enhancing the feel of operating the connector locking mechanism.

In a possible design, a stop pin 2 is arranged inside the pressing sleeve 5 for limiting a stroke of the locking ball sleeve 9. When the connector is in a closed state, the locking ball sleeve 9 is pushed by the third spring 10 to move towards the second chamber 25 until the movement of the locking ball sleeve 9 is blocked by the stop pin 2. At this point, the locking ball sleeve 9 is located below the locking ball 1, and the female terminal is in an unlocked state, so that the male terminal (which includes the male body 20 and the male valve core 21 and other components) may be easily inserted into the female terminal (which includes the pressing sleeve 5 and the female valve seat 6 and other components).

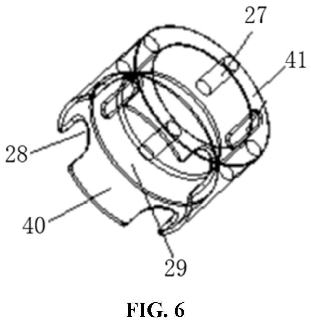

In a possible design, the locking ball sleeve 9 includes a first annular surface 41, a fourth inclined surface 29 and a second annular surface 40 that are joined in sequence. The first annular surface 41 has a diameter smaller than that of the second annular surface 40. The first annular surface 41 has a spring hole 27 for accommodating the third spring 10, and the snap groove 28 is formed in the second annular surface 40, as shown in FIG. 6. Such arrangement of the locking ball sleeve 9 can make the male boss 31 of the male body 20 and the locking ball sleeve 9 cooperate with each other when the male boss 31 of the male body 20 is inserted into the locking ball sleeve 9, enabling the locking ball sleeve 9 to move under the pushing action of the male terminal.

In addition, the dimension of the snap groove 28 should be slightly smaller than a diameter of the locking ball 1. This ensures that the locking ball 1 will be caught by the snap groove 28 when the locking ball 1 falls to the male terminal, preventing the locking ball 1 from completely falling, and facilitating the subsequent upward movement and reset of the locking ball 1. The locking ball sleeve 9 may serve as a locking core for the locking ball 1, and the locking ball sleeve 9 is pushed to move due to the driving force exerted by the third spring 10, thereby enabling the unlocking and locking actions of the locking ball 1.

In a possible design, the outer periphery of the pressing sleeve 5 has an outer stepped surface 37 to limit a movement position of the first boss 34. A position-limiting boss 38 is provided on an outer periphery of the female valve seat 6 to limit a movement position of the end of the sliding sleeve 3. That is, the movement range (left and right movement range) of the sliding sleeve 3 is limited by both the outer stepped surface 37 and the position-limiting boss 38.

In a possible design, the mounting hole 39 has a larger dimension on a side facing the sliding sleeve 3 than that of the locking ball 1, and has a smaller dimension on a side facing away from the sliding sleeve 3 than that of the locking ball 1. This design prevents the locking ball 1 from falling out through the side of the mounting hole 39 facing away from the sliding sleeve 3.

In addition to the above connector locking system, a fluid connector is further provided according to the present application. The fluid connector includes the connector locking system disclosed in the above embodiments, and a female valve core 12 and a valve stem 15. An opening 24 is formed between the first chamber 23 and the second chamber 25. The female valve core 12 is internally provided with a flow channel, and an outer wall of the female valve core 12 can cooperate with the opening 24 and the first chamber 23 to block the opening 24.

One end of the valve stem 15 is connected to the female valve seat 6, and the other end of the valve stem 15 extends through the first chamber 23 and is inserted into the female valve core 12 to block the flow channel. A drainage channel is provided inside the valve stem 15. A second spring 14 is arranged between an end of the female valve core 12 and a second boss 35 of the valve stem 15. For the structures of other parts of the fluid connector are referred to the conventional technology and will not be described in detail herein.

It should be noted that the second boss 35 at the end of the valve stem 15 may be sandwiched between the pressing sleeve 5 and the female valve seat 6. For example, the female valve seat 6 may be connected to the pressing sleeve 5 by riveting, and the second boss 35 of the valve stem 15 may be sandwiched between the pressing sleeve 5 and the female valve seat 6. This arrangement not only facilitates the fixed assembly of the valve stem 15, the female valve seat 6 and the pressing sleeve 5 but also ensures a reliable connection among them.

It should also be noted that, in the initial state, the outer wall of the female valve core 12 blocks the opening 24 of the pressing sleeve 5 and the connection between the opening 24 and the first chamber 23. Moreover, the valve stem 15 may block the flow channel of the female valve core 12. In other words, the female valve core 12, the pressing sleeve 5 and the valve stem 15 enable the first chamber 23 and the opening 24 to form a sealing structure, so that the flow channel is closed.

When the operator holds the male terminal and makes it directly insert into the second chamber 25 of the female terminal, the first inclined surface 30 of the male boss 31 of the male body 20 comes into contact with the inner wall of the locking ball sleeve 9. As the operator keeps applying force, the male terminal is moved towards the first chamber 23. During this process, the locking ball sleeve 9 moves towards the first chamber 23 under the action of the first inclined surface 30, and the female valve core 12 moves towards the first chamber 23 under the action of the male valve core 21. This movement continues until the transition surface 32 of the male boss 31 passes over the locking ball 1 on the female terminal. The locking ball 1 then falls and engages with the snap groove 28. At this point, the locking ball 1 no longer presses against the sliding sleeve 3, which then moves towards the second chamber 25 under the thrust of the first spring 13 until the third inclined surface 26 of the sliding sleeve 3 passes over the locking ball 1. Then, the narrower inner wall surface of the sliding sleeve 3 presses against the top of the locking ball 1, preventing the locking ball 1 from retracting. In this case, the inner wall surface of the sliding sleeve 3 and the second inclined surface 33 of the male boss 31 are both in contact with the locking ball 1, achieving a locking between the male terminal and the female terminal.

When the operator holds the sliding sleeve 3 with one hand and makes it move towards the first chamber 23 until it leaves the locking ball 1, the locking ball 1 may retract freely. At this point, the female valve core 12 may be pushed by the compressed second spring 14 to move towards the second chamber 25. Meanwhile, the male valve core 21 is pushed by the female valve core 12 to move backward towards the second chamber 25 (that is, it is necessary to ensure that the reset elastic force of the male valve core 21 and the female valve core 12 is greater than other acting forces). When the male boss 31 of the male body 20 moves backward, the locking ball 1 may be lifted up by the second inclined surface 33 to move upward and unlock. At this point, the locking ball sleeve 9 may be pushed by the third spring 10 to move towards the second chamber 25. In this case, the locking ball 1 is disengaged from the snap groove 28, and the outer wall of the locking ball sleeve 9 is below the locking ball 1, preventing the sliding sleeve 3 from being tightly pressed by the locking ball 1. As a result, the sliding sleeve 3 is in an unlocked state, facilitating the complete removal of the male terminal.

In a possible design, a first sealing ring 4 is arranged on an inner wall of the opening 24, and a second sealing ring 7 is arranged at a connection between the female valve seat 6 and the pressing sleeve 5. A third sealing ring 8 is arranged at an end of the female valve seat 6, and a fourth sealing ring 11 is arranged at an end of the valve stem 15 that is configured to block the female valve core 12, thereby effectively enhancing the sealing effectiveness between the components of the female terminal.

In a possible design, the fluid connector further includes a male valve core 21, which is arranged within the chamber of the male body 20. A male spring 18 is arranged between an end of the male valve core 21 and an end of the male body 20.

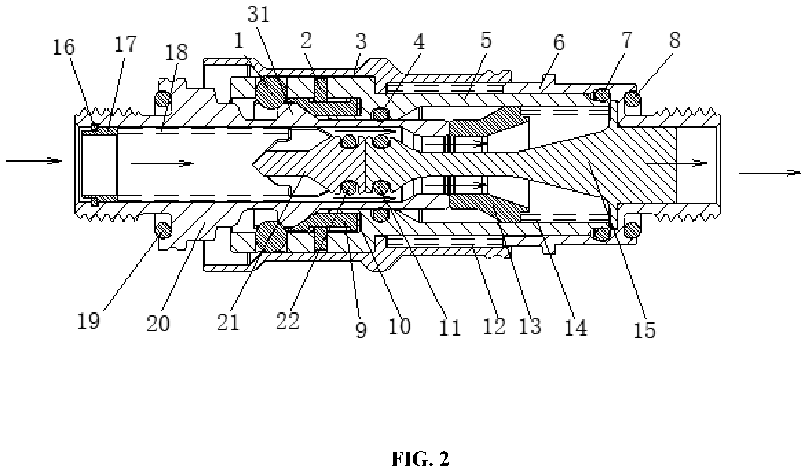

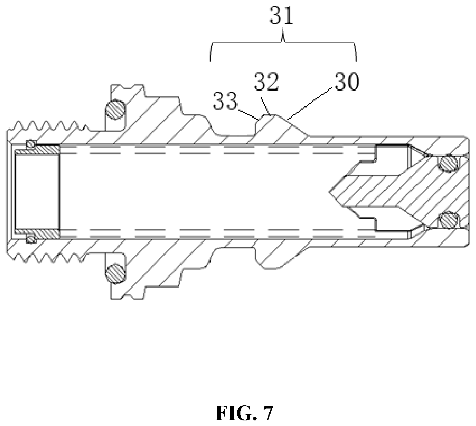

It should be noted that the male valve core 21 is arranged within the chamber of the male body 20. Moreover, one end of the male valve core 21 is configured to abut against the female valve core 12, and a male spring 18 is arranged between the other end of the male valve core 21 and an end of the male body 20. A snap spring 16 and a spring retaining ring 17 may be further arranged at the end of the male body 20. The male spring 18 is arranged between the spring retaining ring 17 and the other end of the male valve core 21. The structure of the male terminal is shown in FIGS. 2 and 7.

In a possible design, a sum of elastic forces of the male spring 18 and the second spring 14 is greater than that of the elastic forces of the first spring 13 and the third spring 10. In other words, the elastic forces exerted by the male spring 18 and the second spring 14 are greater than those exerted by the first spring 13 and the third spring 10. This ensures that, during unlocking, the male valve core 21 may be pushed by the female valve core 12 towards the second chamber 25 (to the left), so that the male terminal moves leftward. At this point, the locking ball 1 will be pushed up by the second inclined surface 33 of the male body 20, and the locking ball sleeve 9 will be no longer pushed leftward by the male terminal. Consequently, the locking ball sleeve 9 is forced by the third spring 10 to move leftward and reset.

In a possible design, a fifth sealing ring 19 is arranged at an end of the male body 20, and a sixth sealing ring 22 is arranged at an end of the male valve core 21, so as to enhance the sealing effectiveness between components within the male terminal.

In order to further illustrate the operation of the fluid connector, three operational states are exemplarily described below.

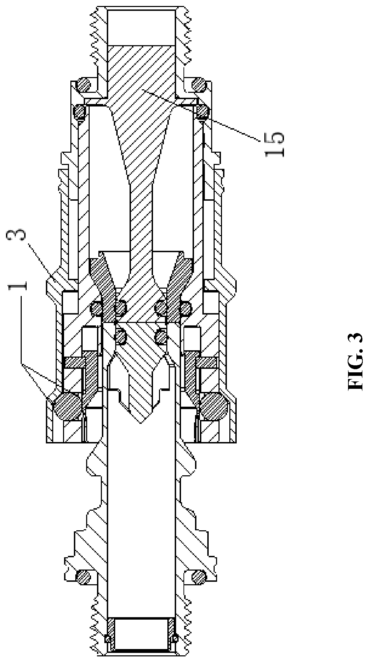

In a first state, namely the state prior to the insertion of the male terminal into the female terminal and the opening of the female valve core 12, the structure is shown in FIG. 3.

Under normal conditions, when the valve is closed, the outer wall surface of the locking ball sleeve 9 just pushes up the bottom of the locking ball 1, so that the locking ball 1 is no longer located within the snap groove 28, and the sliding sleeve 3 comes into contact with the top of the locking ball 1. At this point, the pressing force exerted by the locking ball 1 on the sliding sleeve 3 is balanced with the elastic force of the first spring 13. Moreover, the locking ball sleeve 9 is pushed by the third spring 10 to move towards the second chamber 25 until the leftward movement of the locking ball sleeve 9 is blocked by the stop pin 2. At this moment, the locking ball sleeve 9 is also in a balanced state, and the locking ball sleeve 9 is located below the locking ball 1, so that the connector is in an unlocked state, allowing the male terminal to be easily inserted into the female terminal.

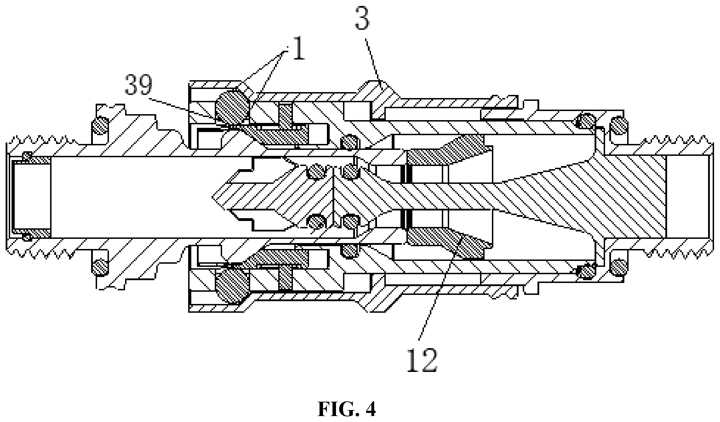

In a second state, namely during the insertion of the male terminal into the female terminal, the structure is shown in FIG. 4.

When the operator holds the male terminal and makes it directly insert into the female terminal, the first inclined surface 30 of the male boss 31 of the male body 20 comes into contact with both the first annular surface 41 and the fourth inclined surface 29 of the locking ball sleeve 9. As the male terminal is continuously inserted into the female terminal with force, the locking ball sleeve 9 moves rightward under the action of the first inclined surface 30 of the male boss 31 until the transition surface 32 of the male boss 31 passes over the locking ball 1 on the female terminal, the locking ball 1 falls and engages with the snap groove 28. At this point, the locking ball 1 no longer presses against the sliding sleeve 3, allowing the sliding sleeve 3 to move leftward under the elastic force of the first spring 13.

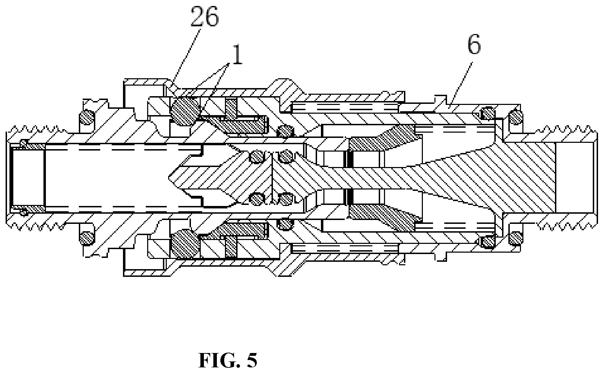

In a third state, namely when the male terminal and the female terminal are inserted in place, the structure is shown in FIG. 5.

As the male terminal continuously moves rightward (i.e., towards the first chamber 23), the locking ball 1 passes over the first inclined surface 30, the transition surface 32, and the second inclined surface 33 in sequence before reaching the second inclined surface 33 of the male body 20. At this time, the bottom of the locking ball 1 abuts against the second inclined surface 33. In addition, the sliding sleeve 3 may move leftward until the third inclined surface 26 of the sliding sleeve 3 passes over the locking ball 1, so that the inner wall surface of the sliding sleeve 3 with a relatively small inner diameter abuts against the locking ball 1, preventing the locking ball 1 from retracting. At this point, both the inner wall surface of the sliding sleeve 3 and the second inclined surface 33 of the male boss 31 are in contact with the locking ball 1, achieving the locking between the male terminal and the female terminal.

In addition, when it is necessary to unlock the male terminal and the female terminal, the female sliding sleeve 3 may be held by the operator with one hand to move rightward until the sliding sleeve 3 leaves the locking ball 1, allowing the locking ball 1 to retract freely. At this point, the male valve core 12 is pushed by the spring 14. Since the reset spring forces of the female valve core 12 and the male valve core 21 are greater than the elastic force of the first spring 13, the male valve core 21 may be pushed away by the female valve core 12, enabling the male terminal to move leftward. During the leftward movement of the male body 20, the locking ball 1 may be pushed up by the second inclined surface 33 of the male boss 31 of the male body 20, allowing the locking ball 1 to move upward and unlock. At this point, the locking ball sleeve 9 is pushed by the third spring 10 to move leftward until the left movement of the locking ball sleeve 9 is blocked by the stop pin 2. In this case, the locking ball 1 disengages from the snap groove 28, and the outer wall of the locking ball sleeve 9 is located below the locking ball 1, so that the sliding sleeve 3 is no longer pressed against by the locking ball 1, and the sliding sleeve 3 is in an unlocked state, facilitating the complete removal of the male terminal from the female terminal.

It should be noted that when referring to the first chamber 23 and the second chamber 25, the first spring 13 and the second spring 14 and the third spring 10, the first boss 34 and the second boss 35, the first sealing ring 4, the second sealing ring 7, the third sealing ring 8, the fourth sealing ring 11, the fifth sealing ring 19 and the sixth sealing ring 22, the first annular surface 41 and the second annular surface 40, the first inclined surface 30, the second inclined surface 33, the third inclined surface 26 and the fourth inclined surface 29 in the present application, the terms such as "first", "second", "third", "fourth", "fifth" and "sixth" are used merely to distinguish different positions and do not imply any sequence.

In addition, it should be noted that, the orientation or positional relationships indicated by terms "left and right", "inner and outer", or the like in the present application are defined based on the orientation or positional relationships shown in the accompanying drawings. These terms are merely used for the convenience of understanding the present application and the simplification of the description, and do not indicate or imply that the device or element referred to must have a particular orientation, or be constructed and operated in a particular orientation. Therefore, they should not be construed as a limit to the present application.

The above embodiments are described in a progressive manner herein. Each of the embodiments is mainly focused on describing its differences from other embodiments, and reference may be made among these embodiments with respect to the same or similar parts. Any combination of all the embodiments provided by the present application falls within the protection scope of the present application, and will not be described in detail herein.

The fluid connector and the connector locking system thereof according to the present application are described in detail above. The principles and embodiments of the present application are described by specific examples. The embodiments are illustrated to facilitate understanding the method and core concept of the present application. It should be noted that those skilled in the art may make several improvements and modifications to the present application without departing from the principles of the present application. These improvements and modifications shall fall within the protection scope of the claims of the present application.

## Claims

1. A connector locking system, comprising:
a pressing sleeve (5), in which a first chamber (23) and a second chamber (25) communicated with the first chamber (23) are provided;
a sliding sleeve (3), which is mounted outside an outer periphery of the pressing sleeve (5);
a female valve seat (6), which is fixedly mounted outside an end of the pressing sleeve (5), and a first spring (13) is arranged between an end of the female valve seat (6) and a first boss (34) of the sliding sleeve (3);
a locking ball sleeve (9), which is movably arranged within the second chamber (25), and a third spring (10) is arranged between an end of the locking ball sleeve (9) and an inner stepped surface (36) of the pressing sleeve (5);
a locking ball (1), wherein the pressing sleeve (5) has a through mounting hole (39), the locking ball (1) is movably arranged within the mounting hole (39), the sliding sleeve (3) internally has a third inclined surface (26), a snap groove (28) is formed in an end of the locking ball sleeve (9) to receive the locking ball (1), in an initial state, both the third inclined surface (26) and an outer wall of the locking ball sleeve (9) are in contact with the locking ball (1), so that the locking ball (1) is in a balanced state and is not located within the snap slot (28); and
a male body (20), which has a male boss (31) on its outer wall, the male boss (31) comprises a first inclined surface (30), a transition surface (32) and a second inclined surface (33) that are joined in sequence, and the first inclined surface (30) cooperates with an inner wall of the locking ball sleeve (9) to push the locking ball sleeve (9) to move.

2. The connector locking system according to claim 1, wherein a stop pin (2) is arranged inside the pressing sleeve (5) for limiting a stroke of the locking ball sleeve (9).

3. The connector locking system according to claim 1, wherein the locking ball sleeve (9) comprises a first annular surface (41), a fourth inclined surface (29) and a second annular surface (40) that are joined in sequence; and the first annular surface (41) has a diameter smaller than that of the second annular surface (40);
the first annular surface (41) has a spring hole (27) for accommodating the third spring (10), and the snap groove (28) is formed in the second annular surface (40).

4. The connector locking system according to any one of claims 1 to 3, wherein the outer periphery of the pressing sleeve (5) has an outer stepped surface (37) to limit a movement of the first boss (34);
a position-limiting boss (38) is arranged on an outer periphery of the female valve seat (6) to limit a movement of an end of the sliding sleeve (3).

5. The connector locking system according to any one of claims 1 to 3, wherein the mounting hole (39) has a larger dimension on a side facing the sliding sleeve (3) than that of the locking ball (1), and has a smaller dimension on a side facing away from the sliding sleeve (3) than that of the locking ball (1).

6. A fluid connector, comprising:
the connector locking system according to any one of claims 1 to 5; and
a female valve core (12) and a valve stem (15), wherein an opening (24) is formed between the first chamber (23) and the second chamber (25), the female valve core (12) is internally provided with a flow channel, and an outer wall of the female valve core (12) cooperates with the opening (24) and the first chamber (23) to block the opening (24);
one end of the valve stem (15) is connected to the female valve seat (6), whereas the other end of the valve stem (15) extends through the first chamber (23) and is inserted into the female valve core (12) to block the flow channel, a drainage channel is provided in the valve stem (15), and a second spring (14) is arranged between an end of the female valve core (12) and a second boss (35) of the valve stem (15).

7. The fluid connector according to claim 6, wherein a first sealing ring (4) is arranged on an inner wall of the opening (24), a second sealing ring (7) is arranged at a connection between the female valve seat (6) and the pressing sleeve (5), a third sealing ring (8) is arranged at an end of the female valve seat (6), and a fourth sealing ring (11) is arranged at an end of the valve stem (15) configured for blocking the female valve core (12).

8. The fluid connector according to claim 6, further comprising a male valve core (21), which is arranged within a chamber of the male body (20), and a male spring (18) is arranged between an end of the male valve core (21) and an end of the male body (20).

9. The fluid connector according to claim 8, wherein a sum of elastic forces of the male spring (18) and the second spring (14) is greater than that of elastic forces of the first spring (13) and the third spring (10).

10. The fluid connector according to claim 8, wherein a fifth sealing ring (19) is arranged at an end of the male body (20), and a sixth sealing ring (22) is arranged at an end of the male valve core (21).
